# EUROPEAN PATENT APPLICATION

(11) **EP 4 095 823 A1**
(43) Date of publication of application: **30.11.2022**
(21) Application number: 21744609.5
(22) Date of filing: 14.01.2021
(51) Int. Cl.: G08G 1/16, B60W 40/08, B60W 50/14

(54) **INFORMATION PROCESSING DEVICE, INFORMATION PROCESSING METHOD, INFORMATION PROCESSING PROGRAM, AND STORAGE MEDIUM**

(30) Priority: 21.01.2020 JP 2020007865
(71) Applicant: Pioneer Corporation, Tokyo 113-0021 (JP)
(72) Inventor: OHISHI, Tomoya, Kawagoe-shi, Saitama 350-8555 (JP); FUJIE, Shogo, Kawagoe-shi, Saitama 350-8555 (JP); SATO, Shoko, Kawagoe-shi, Saitama 350-8555 (JP)
(74) Representative: Hoffmann Eitle
(86) International application number: PCT/JP2021/001125
(87) International publication number: WO 2021/149593

(57) **Abstract**

An information processing device 3 includes: a posture detection unit 322 that detects a posture unconsciously taken by a passenger in a mobile body; and a service execution unit 324 that enables execution of a plurality of types of services for the passenger and executes at least one service among the plurality of types of services on the basis of the posture of the passenger.

## Description

### Field

The present invention relates to an information processing device, an information processing method, an information processing program, and a storage medium. Background

In the related art, smart speakers having a voice assistant function of recognizing voice input from a microphone by artificial intelligence (AI) on a network and responding to the voice that has been input is known (see, for example, Patent Literature 1). The voice assistant function is activated in response to a specific word (hereinafter referred to as a trigger word) uttered by a user.

### Citation List

### Patent Literature

Patent Literature 1: JP 2019 -184809 A

### Summary

### Technical Problem

In the technology described in Patent Literature 1, as an example, there is a problem that it is necessary to cause a user who desires to receive provision of a service using a voice assistant function to perform a work of uttering a trigger word, which cannot enhance the convenience.

The present invention has been made in view of the above, and an object of the present invention is to provide an information processing device, an information processing method, an information processing program, and a storage medium that can improve, for example, the convenience.

### Solution to Problem

An information processing device, includes a posture detection unit that detects a posture unconsciously taken by a passenger in a mobile body, and a service execution unit that enables execution of a plurality of types of services for the passenger and executes at least one service among the plurality of types of services on the basis of the posture.

An information processing method executed by an information processing device, the method includes a posture detection step of detecting a posture unconsciously taken by a passenger in a mobile body, and a service execution step of executing at least one service among a plurality of types of services for the passenger on the basis of the posture.

An information processing program for causing a computer, executes a posture detection step of detecting a posture unconsciously taken by a passenger in a mobile body, and a service execution step of executing at least one service among a plurality of types of services for the passenger on the basis of the posture.

A storage medium storing an information processing program for causing a computer, executes a posture detection step of detecting a posture unconsciously taken by a passenger in a mobile body, and a service execution step of executing at least one service among a plurality of types of services for the passenger on the basis of the posture.

### Brief Description of Drawings

FIG. 1 is a block diagram illustrating a configuration of an information processing system according to an embodiment.
FIG. 2 is a block diagram illustrating a configuration of an in-vehicle terminal.
FIG. 3 is a block diagram illustrating a configuration of an information processing device.
FIG. 4 is a flowchart illustrating an information processing method.
FIG. 5 is a diagram for describing an information processing method.

### Description of Embodiments

Hereinafter, modes for carrying out the present invention (hereinafter, embodiments) will be described by referring to the drawings. Note that the present invention is not limited by the embodiments described below. Furthermore, in the description of the drawings, the same components are denoted by the same symbol.

### [Schematic Configuration of Information Processing System]

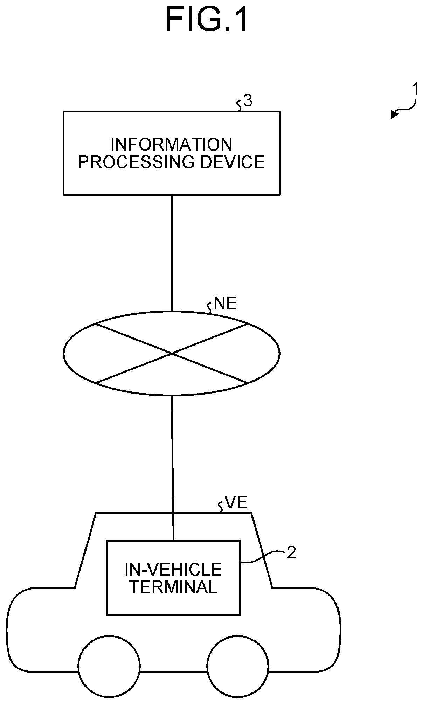

FIG. 1 is a block diagram illustrating a configuration of an information processing system 1 according to an embodiment.

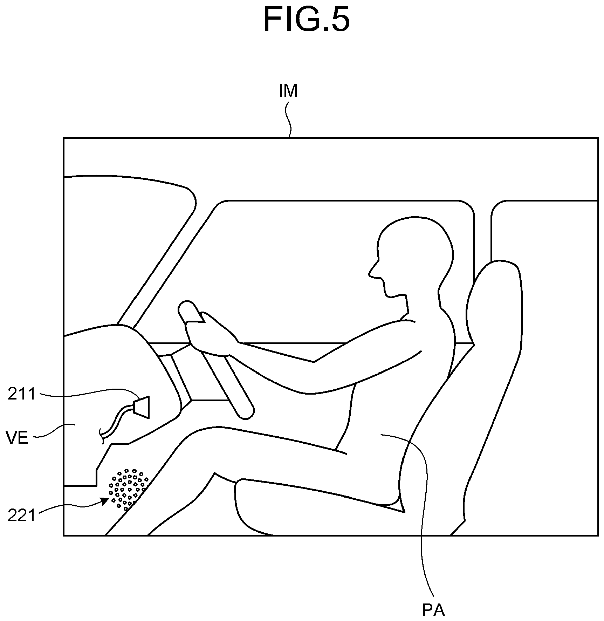

The information processing system 1 executes a service corresponding to a posture of a passenger PA (see FIG. 5) of a vehicle VE (FIG. 1), which is a mobile body, for the passenger PA. As illustrated in FIG. 1, the information processing system 1 includes an in-vehicle terminal 2 and an information processing device 3. The in-vehicle terminal 2 and the information processing device 3 communicate with each other via a network NE (FIG. 1) which is a wireless communication network.

Note that although a case where a single in-vehicle terminal 2 communicates with the information processing device 3 is illustrated in FIG. 1, however, a plurality of in-vehicle terminals 2 may be mounted respectively on a plurality of vehicles. In addition, a plurality of in-vehicle terminals 2 may be mounted on a single vehicle in order to execute service for each of a plurality of passengers onboard the single vehicle.

### [Configuration of In-Vehicle Terminal]

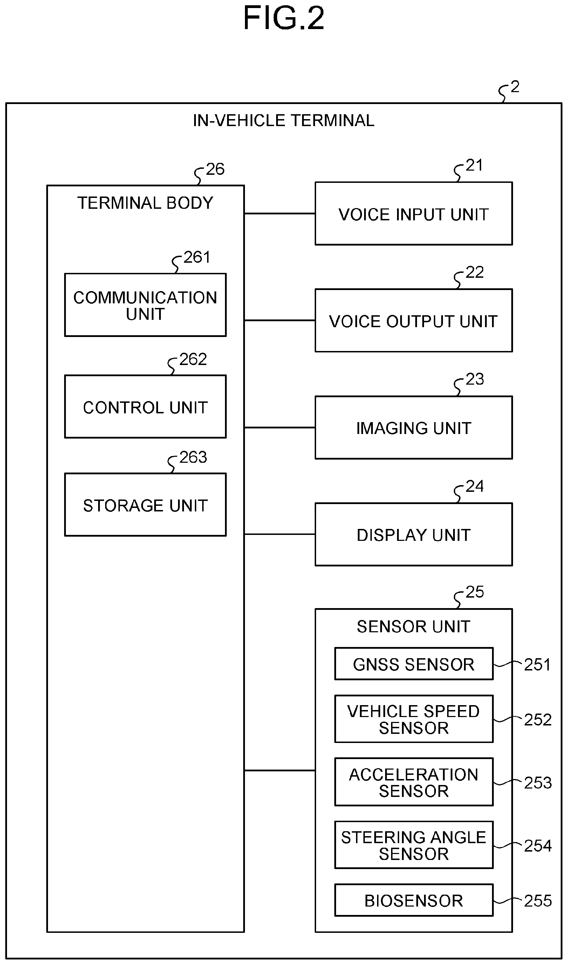

FIG. 2 is a block diagram illustrating a configuration of the in-vehicle terminal 2.

The in-vehicle terminal 2 is, for example, a stationary navigation device or a dashboard camera installed in the vehicle VE. Note that the in-vehicle terminal 2 is not limited to a navigation device nor a dashboard camera and may be a portable terminal such as a smartphone that the passenger PA of the vehicle VE uses. As illustrated in FIG. 2, the in-vehicle terminal 2 includes a voice input unit 21, a voice output unit 22, an imaging unit 23, a display unit 24, a sensor unit 25, and a terminal body 26.

The voice input unit 21 includes a microphone 211 (see FIG. 5), which inputs voice and converts the voice into an electric signal and generates voice information by performing analog/digital (A/D) conversion or the like on the electric signal. In the present embodiment, the voice information generated by the voice input unit 21 is a digital signal. Then, the voice input unit 21 outputs the voice information to the terminal body 26.

The voice output unit 22 includes a speaker 221 (see FIG. 5), converts a digital voice signal input from the terminal body 26 into an analog voice signal by digital/analog (D/A) conversion, and outputs voice corresponding to the analog voice signal from the speaker 221.

The imaging unit 23 images the passenger PA of the vehicle VE and generates a captured image under the control of the terminal body 26. Then, the imaging unit 23 outputs the captured image that has been generated to the terminal body 26.

The display unit 24 includes a display using liquid crystal, organic electro luminescence (EL), or the like, and displays various images under the control of the terminal body 26.

As illustrated in FIG. 2, the sensor unit 25 includes a global navigation satellite system (GNSS) sensor 251, a vehicle speed sensor 252, an acceleration sensor 253, a steering angle sensor 254, and a biosensor 255.

The GNSS sensor 251 receives radio waves including positioning data transmitted from navigation satellites using a GNSS. The positioning data is used to detect the absolute position of the vehicle VE from latitude and longitude information. Note that the GNSS to be used may be, for example, a global positioning system (GPS) or other systems.

The vehicle speed sensor 252 detects the speed of the vehicle VE and generates vehicle speed data corresponding to the speed.

The acceleration sensor 253 detects, for example, acceleration in the vertical direction in the vehicle VE and generates vibration data corresponding to the acceleration. The vibration data is data corresponding to acceleration in the vertical direction that is applied to the vehicle VE when the vehicle VE passes over unevenness, a hole, or an obstacle on a road. That is, the vibration data corresponds to route state information according to the present embodiment related to the state of a travel route of the vehicle VE.

The steering angle sensor 254 detects a steering wheel angle in the vehicle VE and generates steering angle data corresponding to the steering wheel angle.

The biosensor 255 is built in a seat on which the passenger PA of the vehicle VE sits or is a wearable device worn by the passenger PA of the vehicle VE or is installed in the vicinity of the passenger PA of the vehicle VE. The biosensor 255 detects biological information such as the heartbeat, the pulse wave, respiration, body motion, and brain waves of the passenger PA and generates biometric data corresponding to the biological information.

The sensor unit 25 further outputs output data such as the positioning data, the vehicle speed data, the vibration data, the steering angle data, and the biometric data described above to the terminal body 26.

As illustrated in FIG. 2, the terminal body 26 includes a communication unit 261, a control unit 262, and a storage unit 263.

The communication unit 261 transmits and receives information to and from the information processing device 3 via the network NE under the control of the control unit 262.

The control unit 262 is implemented by a controller such as a central processing unit (CPU) or a micro processing unit (MPU) executing various programs stored in the storage unit 263 and controls the entire operation of the in-vehicle terminal 2. Note that, without being limited to a CPU or an MPU, the control unit 262 may be configured by an integrated circuit such as an application specific integrated circuit (ASIC) and a field programmable gate array (FPGA).

The storage unit 263 stores various programs executed by the control unit 262, data required when the control unit 262 performs processing, and the like.

### [Configuration of Information Processing Device]

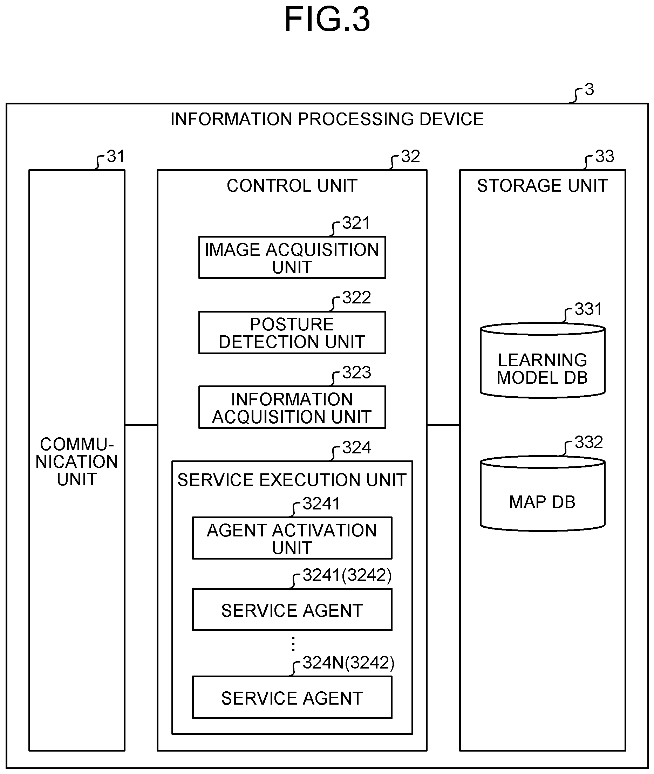

FIG. 3 is a block diagram illustrating a configuration of the information processing device 3.

The information processing device 3 is, for example, a server device. As illustrated in FIG. 3, the information processing device 3 includes a communication unit 31, a control unit 32, and a storage unit 33.

The communication unit 31 transmits and receives information to and from the in-vehicle terminal 2 (communication unit 261) or the like via the network NE under the control of the control unit 32.

The control unit 32 is implemented by a controller such as a CPU or an MPU executing various programs (including the information processing program according to the present embodiment) stored in the storage unit 33 and controls the entire operation of the information processing device 3. Note that, without being limited to a CPU or an MPU, the control unit 32 may be configured by an integrated circuit such as an ASIC and an FPGA. As illustrated in FIG. 3, the control unit 32 includes an image acquisition unit 321, a posture detection unit 322, an information acquisition unit 323, and a service execution unit 324.

The image acquisition unit 321 acquires the captured image generated by the imaging unit 23 from the in-vehicle terminal 2 via the communication unit 31.

The posture detection unit 322 detects the posture of the passenger PA in the vehicle VE. The posture of the passenger PA includes a posture unconsciously taken by the passenger. In the present embodiment, the posture detection unit 322 detects the posture by so-called skeleton detection. More specifically, the posture detection unit 322 detects the posture of the passenger PA by detecting the skeleton of the passenger PA of the vehicle VE included as a subject in the captured image acquired by the image acquisition unit 321 by image recognition (image recognition using AI) using a learning model described below.

The learning model is obtained by using an image, in which positions of joint points of a person are labeled in advance in the captured image obtained by capturing the person, as a teacher image and performing machine learning (for example, deep learning or the like) on the positions of the joint points on the basis of the teacher image.

The information acquisition unit 323 acquires various types of information such as output data, road traffic information, road data, facility information, boarding time information, and tempo information described below.

The output data is output data of the sensor unit 25 acquired from the in-vehicle terminal 2 via the communication unit 31.

The road traffic information is road traffic information such as congestion information or traffic information acquired from a vehicle information communication system (VICS, registered trademark) center via the communication unit 31 and corresponds to the current position of the vehicle VE estimated from the above-described output data (positioning data received by the GNSS sensor 251).

The road data is road data stored in the storage unit 33 and indicates a road on which the vehicle VE is traveling, the road data corresponding to the current position of the vehicle VE estimated from the above-described output data (positioning data received by the GNSS sensor 251). That is, the road data corresponds to travel route information according to the present embodiment related to the travel route of the vehicle VE. The facility information is facility information stored in the storage unit 33 and indicates facilities around the current position of the vehicle VE estimated from the above-described output data (positioning data received by the GNSS sensor 251).

Note that the storage location of the above-described road data and facility information is not limited to the configuration stored in the storage unit 33 and may be another location, for example, the storage unit 263.

The boarding time information is information acquired from the in-vehicle terminal 2 via the communication unit 31 and relates to a driving time during which the vehicle VE is continuously driven (for example, a time during which the engine of the vehicle VE is continuously ON). The driving time is measured by the control unit 262, for example.

The tempo information is information acquired from the in-vehicle terminal 2 via the communication unit 31 and relates to the tempo (beats per minute (BPM)) of music being played in the in-vehicle terminal 2. The tempo information is, for example, information generated by the control unit 262 analyzing music data of the music by a known analysis method, or information related to the BPM included in tag data or the like inside the music data.

It is based on the premise that the service execution unit 324 can execute a plurality of types of services for the passenger PA of the vehicle VE. Then, the service execution unit 324 executes at least one service among the plurality of types of services on the basis of the posture of the passenger PA detected by the posture detection unit 322 and the various types of information acquired by the information acquisition unit 323. As illustrated in FIG. 3, the service execution unit 324 includes an agent activation unit 3241 and a plurality of service agents 32421 to 3242N.

Hereinafter, in a case where it is not necessary to particularly distinguish among the plurality of service agents 32421 to 3242N, the plurality of service agents will be simply referred to as service agents 3242.

The plurality of service agents 32421 to 3242N each executes different services for the passenger PA of the vehicle VE. The service agents 3242 each include at least one application program that executes at least one task (function). That is, "executing a service" according to the present embodiment means executing the at least one of the tasks (functions).

The agent activation unit 3241 determines whether or not to activate a service agent 3242 on the basis of the posture of the passenger PA of the vehicle VE detected by the posture detection unit 322 and various types of information acquired by the information acquisition unit 323. Meanwhile, in a case where it is determined to activate a service agent 3242, the agent activation unit 3241 selects and activates, from among the plurality of service agents 32421 to 3242N, at least one service agent 3242 corresponding to the posture and the various types of information. Then, the at least one service agent 3242 that has been activated executes a service.

In addition to the various programs (information processing program according to the present embodiment) executed by the control unit 32, the storage unit 33 stores data and the like necessary for the control unit 32 to perform processing. As illustrated in FIG. 3, the storage unit 33 includes a learning model database (DB) 331 and a map DB 332.

The learning model DB 331 stores the above-described learning model.

The map DB 332 stores map data. The map data includes road data expressed by a link that corresponds to a road and a node that corresponds to a connection point (intersection) of the road, facility information in which each facility and the position (hereinafter, described as a facility position) of the facility are associated with each other, and other information.

### [Information Processing Method]

Next, an information processing method executed by the information processing device 3 (control unit 32) will be described.

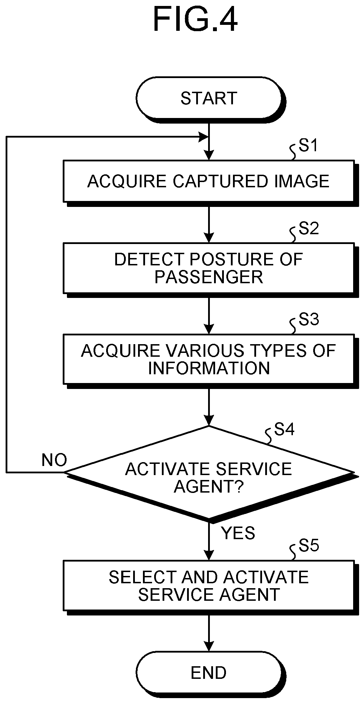

FIG. 4 is a flowchart illustrating the information processing method. FIG. 5 is a diagram illustrating the information processing method. Specifically, FIG. 5 is a diagram illustrating a captured image IM generated by the imaging unit 23 and acquired in step S1. Here, illustrated in FIG. 5 is a case where the imaging unit 23 is installed in the vehicle VE so as to image the passenger (driver) PA seated at the driver's seat of the vehicle VE from a side.

Note that the installation position of the imaging unit 23 is not limited to the above installation position. For example, the imaging unit 23 may be installed in the vehicle VE so as to image the passenger PA from the front. In addition, the passenger of the vehicle according to the present embodiment is not limited to a passenger seated at the driver's seat of the vehicle VE and includes a passenger seated at the passenger seat or the rear seats.

In addition, the number of imaging units 23 installed in the vehicle VE is not limited to one, and may be plural. That is, a configuration may be adopted in which one passenger PA is imaged by a plurality of imaging units 23, and the posture of the passenger PA is detected from a plurality of viewpoints.

First, the image acquisition unit 321 acquires the captured image IM generated by the imaging unit 23 from the in-vehicle terminal 2 via the communication unit 31 (step S1).

After step S1, the posture detection unit 322 detects the posture of the passenger PA by detecting the skeleton of the passenger PA of the vehicle VE included as a subject in the captured image IM by image recognition using the learning model stored in the learning model DB 331 (step S2: posture detection step).

After step S2, the information acquisition unit 323 acquires various types of information (step S3).

After step S3, the agent activation unit 3241 determines whether or not to activate a service agent 3242 on the basis of the posture of the passenger PA detected in step S2 and the various types of information acquired in step S3 (step S4).

If it is determined not to activate any service agent 3242 (step S4: No), the control unit 32 returns to step S1.

On the other hand, if it is determined to activate a service agent 3242 (step S4: Yes), the agent activation unit 3241 selects and activates, from among the plurality of service agents 32421 to 3242N, at least one service agent 3242 corresponding to the posture of the passenger PA detected in step S2 and the various types of information acquired in step S3 (step S5). As a result, the at least one service agent 3242 that has been activated executes a service. That is, step S5 corresponds to a service execution step according to the present embodiment.

Note that details of steps S4 and S5 will be described in "Specific Examples of Service Agents" described below.

### [Specific Examples of Service Agents]

As the service agents 3242 described above, the following first to tenth service agents can be exemplified.

### [First Service Agent (Food Order Agent)]

A first service agent is a service agent 3242 that executes the following first and second tasks (functions).

A first task (function) is to have interaction with the passenger PA of the vehicle VE. More specifically, by executing the first task (function), the first service agent acquires, from the in-vehicle terminal 2 via the communication unit 31, voice information generated by the voice input unit 21 on the basis of voice obtained by the voice input unit 21 by capturing words (the voice) uttered by the passenger PA. Furthermore, the first service agent recognizes the voice information that has been acquired and transmits voice information to be responded to the voice indicated by the voice information to the in-vehicle terminal 2 via the communication unit 31. As a result, the voice corresponding to the voice information is output from the voice output unit 22, and interaction is performed between the passenger PA and the first service agent.

Here, the first task (function) is different from a third, fourth, sixth, eighth, tenth, and twelfth tasks (functions) described later in the following points.

Specifically, during the execution of the first task (function), the first service agent considers the current position of the vehicle VE estimated from the output data (positioning data received by the GNSS sensor 251) acquired in step S3, a route to a destination of the vehicle VE, or the like. Then, the first service agent suggests food or drinks that the passenger PA can receive to the passenger PA while interacting with the passenger PA of the vehicle VE.

A second task (function) is executed in a case where the food or drinks are suggested in the first task (function) described above and the passenger PA of the vehicle VE desires the food or drinks. More specifically, by executing the second task (function), the first service agent accesses an external management server that accepts the order or delivery of the food or drinks via the communication unit 31 and requests the order or delivery of the food or drinks.

Then, in a case where the posture of the passenger PA detected in step S2 is "posture of leaning on the steering wheel (hereinafter, referred to as a first posture)", the agent activation unit 3241 selects the first service agent in steps S4 and S5.

Here, in selecting the first service agent, the agent activation unit 3241 considers the following information among the various types of information acquired in step S3 in addition to the posture of the passenger PA. The information is at least one of boarding time information and output data of the sensor unit 25 (biometric data generated by the biosensor 255). Specifically, the agent activation unit 3241 selects the first service agent in a case where the posture of the passenger PA is the first posture and at least one of the following first and second cases apply.

That is, the first case is when the driving time of the passenger PA indicated by the boarding time information is a greater than or equal to a specific threshold value. The second case is when the state of the passenger PA is estimated to be a fatigued state from the heartbeat or the like of the passenger PA indicated by the biometric data.

As described above, the first service agent is activated when the passenger PA of the vehicle VE is in a fatigued state and needs to eat or drink.

### [Second Service Agent (Rest Suggesting Agent)]

A second service agent is a service agent 3242 that executes a third task (function).

The third task (function) is to interact with the passenger PA of the vehicle VE, similarly to the first task (function) described above.

Here, during the execution of the third task (function), the second service agent considers the current position of the vehicle VE estimated from the output data (positioning data received by the GNSS sensor 251) acquired in step S3, a route to a destination of the vehicle VE, or the like. Then, the second service agent suggests, to the passenger PA, a rest place such as a service area or a convenience store near the current position and urges the passenger PA to take a break while interacting with the passenger PA of the vehicle VE.

Then, in a case where the posture of the passenger PA detected in step S2 is "posture of yawning (hereinafter, referred to as a second posture)", the agent activation unit 3241 selects the second service agent in steps S4 and S5.

Here, in selecting the second service agent, the agent activation unit 3241 considers the following information among the various types of information acquired in step S3 in addition to the posture of the passenger PA. The information is at least one of boarding time information, road traffic information, and output data of the sensor unit 25 (biometric data generated by the biosensor 255). Specifically, the agent activation unit 3241 selects the second service agent in a case where the posture of the passenger PA is the second posture and at least one of the following third to sixth cases applies.

That is, the third case is when the driving time of the passenger PA indicated by the boarding time information is greater than or equal to a specific threshold value. The fourth case is when a wake-up time of the passenger PA estimated from the biometric data is earlier than a specific time. The fifth case is when the road, on which the vehicle VE is traveling, indicated by the road traffic information is congested. The sixth case is when the state of the passenger PA is estimated to be a drowsy state from the heartbeat or the like of the passenger PA indicated by the biometric data.

As described above, the second service agent is activated when the passenger PA of the vehicle VE is in a drowsy state and needs a break.

### [Third Service Agent (Entertainment Agent)]

A third service agent is a service agent 3242 that executes the following fourth and fifth tasks (functions).

The fourth task (function) is to interact with the passenger PA of the vehicle VE, similarly to the first task (function) described above.

Here, the third service agent gives a quiz to the passenger PA of the vehicle VE while interacting with the passenger PA by executing the fourth task (function).

The fifth task (function) is to cause the in-vehicle terminal 2 to reproduce specific music data and to play the specific music. Specifically, the third service agent transmits specific music data to the in-vehicle terminal 2 via the communication unit 31 by executing the fifth task (function). As a result, the in-vehicle terminal 2 reproduces the music data.

Then, in a case where the posture of the passenger PA detected in step S2 is "posture of resting an arm on the window (hereinafter, referred to as a third posture)", the agent activation unit 3241 selects the third service agent in steps S4 and S5.

Here, in selecting the third service agent, the agent activation unit 3241 considers the following information among the various types of information acquired in step S3 in addition to the posture of the passenger PA. The information is at least one of boarding time information, road data, road traffic information, and output data (vibration data generated by the acceleration sensor 253 and biometric data generated by the biosensor 255) of the sensor unit 25. Specifically, the agent activation unit 3241 selects the third service agent in a case where the posture of the passenger PA is the third posture and at least one of the following seventh to eleventh cases applies.

That is, a seventh case is when the driving time of the passenger PA indicated by the boarding time information is greater than or equal to a specific threshold value. An eighth case is when the road, on which the vehicle VE is traveling, indicated by the road data is a monotonous road (for example, a road or the like that is continuously straight). A ninth case is when the road on which the vehicle VE is traveling is estimated to be a monotonous road (for example, a smooth road or the like) from the acceleration in the vertical direction of the vehicle VE which is indicated by the vibration data. A tenth case when the traffic volume of the road on which the vehicle VE is traveling which is indicated by the road traffic information is less than or equal to a specific threshold value. An eleventh case is when the state of the passenger PA is estimated to be a fatigue-free state from the heartbeat or the like of the passenger PA indicated by the biometric data.

As described above, the third service agent is activated, for example, when the vehicle VE is traveling on a monotonous road and the passenger PA of the vehicle VE is bored.

### [Fourth Service Agent (Tourism Information Agent)]

A fourth service agent is a service agent 3242 that executes the following sixth and seventh tasks (functions).

A sixth task (function) is to interact with the passenger PA of the vehicle VE, similarly to the first task (function) described above.

A seventh task (function) is to recognize an object outside the vehicle VE (for example, a building) when the passenger PA of the vehicle VE points at the object with a finger. More specifically, the fourth service agent acquires the captured image IM from the in-vehicle terminal 2 via the communication unit 31 by executing the seventh task (function). The fourth service agent also recognizes the object located in the direction of the finger of the passenger PA that is included as a subject in the captured image IM is on the basis of the captured image IM. The object information (for example, the name of the object) describing the object that has been recognized is output by voice to the passenger PA by executing the sixth task (function) described above, for example.

Then, in a case where the posture of the passenger PA detected in step S2 is "posture pointing outside the vehicle VE (hereinafter, referred to as a fourth posture)", the agent activation unit 3241 selects the fourth service agent in steps S4 and S5.

Here, in selecting the fourth service agent, the agent activation unit 3241 also considers facility information among the various types of information acquired in step S3 in addition to the posture of the passenger PA. Specifically, the agent activation unit 3241 selects the fourth service agent in a case where the posture of the passenger PA is the fourth posture and it is estimated that the vehicle VE is traveling in a tourist spot from facilities around the current position of the vehicle VE indicated by the facility information.

As described above, the fourth service agent is activated, for example, when the passenger PA of the vehicle VE points outside the vehicle VE while the vehicle VE is traveling in a tourist spot.

### [Fifth Service Agent (Safety Agent)]

A fifth service agent is a service agent 3242 that executes an eighth task (function) described below.

The eighth task (function) is to interact with the passenger PA of the vehicle VE, similarly to the first task (function) described above.

Here, the fifth service agent urges the passenger PA to drive while holding the steering wheel with both hands for the sake of safety while interacting with the passenger PA of the vehicle VE by executing the eighth task (function).

Then, in a case where the posture of the passenger PA detected in step S2 is "posture holding the steering wheel with one hand (hereinafter, referred to as a fifth posture)", the agent activation unit 3241 selects the fifth service agent in steps S4 and S5.

Here, in selecting the fifth service agent, the agent activation unit 3241 considers the following information among the various types of information acquired in step S3 in addition to the posture of the passenger PA. The information is at least one of road data or output data of the sensor unit 25 (vibration data generated by the acceleration sensor 253). Specifically, the agent activation unit 3241 selects the fifth service agent in a case where the posture of the passenger PA is the fifth posture and at least one of the following twelfth and thirteenth cases.

That is, the twelfth case is when the road on which the vehicle VE is traveling indicated by the road data is a mountain path with many corners. The thirteenth case is when it is estimated that the road on which the vehicle VE is traveling is a mountain path with many corners from the acceleration in the vertical direction of the vehicle VE indicated by the vibration data.

As described above, the fifth service agent is activated, for example, when the passenger PA of the vehicle VE is driving dangerously (holding a steering wheel with one hand) while the vehicle VE is traveling on a mountain path with many corners.

### [Sixth Service Agent (Disk Jockey (DJ) Agent)]

A sixth service agent is a service agent 3242 that executes a ninth task (function) described below.

The ninth task (function) is to select music to be listened to or to add an effect of a DJ to the music so that the music played on the in-vehicle terminal 2 is listened to with enjoyment.

Then, in a case where the posture of the passenger PA detected in step S2 is "posture swinging to the right and left at a certain rhythm (hereinafter, referred to as a sixth posture)", the agent activation unit 3241 selects the sixth service agent in steps S4 and S5.

Here, in selecting the sixth service agent, the agent activation unit 3241 also considers tempo information among the various types of information acquired in step S3 in addition to the posture of the passenger PA. Specifically, the agent activation unit 3241 selects the sixth service agent in a case where the posture of the passenger PA is the fourth posture and the certain rhythm of swinging to the right and left indicated by the fourth posture substantially matches the tempo of the music being reproduced in the in-vehicle terminal 2 indicated by the tempo information.

As described above, the sixth service agent is activated when the passenger PA of the vehicle VE is moving to the rhythm at a tempo of the music being reproduced in the in-vehicle terminal 2.

### [Seventh Service Agent (Friend Agent)]

A seventh service agent is a service agent 3242 that executes a tenth task (function) described below.

The tenth task (function) is to interact with the passenger PA of the vehicle VE, similarly to the first task (function) described above.

Here, the seventh service agent interacts with the passenger PA in accordance with the feeling of the passenger PA that is estimated from the captured image IM acquired in step S1 or the heartbeat or the like of the passenger PA indicated by the biometric data acquired in step S3 by executing the tenth task (function).

Then, in a case where the posture of the passenger PA detected in step S2 is "posture looking at a book or a smartphone (hereinafter, referred to as a seventh posture)", the agent activation unit 3241 selects the seventh service agent in steps S4 and S5.

As described above, the seventh service agent is activated when the passenger PA of the vehicle VE is looking at a book or a smartphone.

### [Eighth Service Agent (Emergency Agent)]

An eighth service agent is a service agent 3242 that executes an eleventh task (function) described below.

The eleventh task (function) is to control the operation of the vehicle VE via the communication unit 31 and the in-vehicle terminal 2 to cause the vehicle VE to automatically stop on a road for emergency. Here, the eighth service agent refers to the road data acquired in step S3 and the output data (vehicle speed data generated by the vehicle speed sensor 252 and the steering angle data generated by the steering angle sensor 254) of the sensor unit 25 when controlling the operation of the vehicle VE during execution of the eleventh task (function).

Then, in a case where the posture of the passenger PA detected in step S2 has been in a "posture that is not a normal driving posture (hereinafter, referred to as an eighth posture)" for a certain period of time, the agent activation unit 3241 selects the eighth service agent in steps S4 and S5. Examples of posture that is not a normal driving posture include postures in which the head falls forward, backward, or in other directions or postures in which the body is fallen in a state in which looking forward is not possible.

Here, in selecting the eighth service agent, the agent activation unit 3241 also considers output data of the sensor unit 25 (biometric data generated by the biosensor 255) among the various types of information acquired in step S3 in addition to the posture of the passenger PA. Specifically, the agent activation unit 3241 selects the eighth service agent in a case where the passenger PA has been in the eighth posture for a certain period of time and it is estimated that the state of the passenger PA is an unconscious state from the heartbeat or the like of the passenger PA indicated by the biometric data.

As described above, the eighth service agent is activated when the passenger PA of the vehicle VE is unconscious.

### [Ninth Service Agent (Dialog Agent)]

A ninth service agent is a service agent 3242 that executes a twelfth task (function) described below.

The twelfth task (function) is to interact with the passenger PA of the vehicle VE, similarly to the first task (function) described above.

Then, in a case where the posture of the passenger PA detected in step S2 has been in a "posture with both hands placed at the back the head (hereinafter, referred to as a ninth posture)" for a certain period of time, the agent activation unit 3241 selects the ninth service agent in steps S4 and S5.

As described above, the ninth service agent is activated when the passenger PA of the vehicle VE is thinking about something.

### [Tenth Service Agent (Passenger Compartment Environment Controlling Agent)]

A tenth service agent is a service agent 3242 that executes a thirteenth task (function) described below.

The thirteenth task (function) is to prompt the passenger PA of the vehicle VE to have a good sleep by performing air conditioner adjustment, sound volume adjustment, seat reclining, and the like of the vehicle VE via the communication unit 31 and the in-vehicle terminal 2.

Then, in a case where the posture of the passenger PA detected in step S2 has been in a "posture of leaning against the seat (hereinafter, referred to as a tenth posture)" for a certain period of time, the agent activation unit 3241 selects the tenth service agent in steps S4 and S5.

Here, in selecting the tenth service agent, the agent activation unit 3241 also considers output data of the sensor unit 25 (biometric data generated by the biosensor 255) among the various types of information acquired in step S3 in addition to the posture of the passenger PA. Specifically, the agent activation unit 3241 selects the tenth service agent in a case where the passenger PA has been in the tenth posture for a certain period of time and the state of the passenger PA is designated as sleeping state from the heartbeat or the like of the passenger PA indicated by the biometric data.

As described above, the tenth service agent is activated when the passenger PA of the vehicle VE is sleeping.

Note that the case of determining not to activate any of the service agents 3242 (step S4: No) corresponds to, for example, a case where none of the first to tenth service agents described above is selected.

According to the present embodiment described above, the following effects are achieved.

The information processing device 3 according to the present first embodiment detects a posture unconsciously taken by the passenger PA of the vehicle VE and executes at least one service among a plurality of types of services on the basis of the posture. In other words, at least one of the plurality of service agents 32421 to 3242N is activated on the basis of the posture.

That is, the passenger PA of the vehicle VE does not need to utter a trigger word as in the related art in order to activate at least one of the plurality of service agents 32421 to 3242N. Thus, the convenience can be enhanced.

In particular, at least one of the plurality of service agents 32421 to 3242N is actively activated depending on the posture of the passenger PA of the vehicle VE. Therefore, it is possible to execute an appropriate service at an appropriate timing for the passenger PA.

In addition, the information processing device 3 detects the posture of the passenger PA of the vehicle VE by so-called skeleton detection. Therefore, the posture can be detected with high accuracy, and an appropriate service agent 3242 can be activated.

In addition, the information processing device 3 activates at least one of the plurality of service agents 32421 to 3242N on the basis of the posture unconsciously taken by the passenger PA of the vehicle VE and at least one of the boarding time information, the biometric data of the passenger PA, or the congestion information of the road on which the vehicle VE is traveling. Therefore, it is possible to further clarify the state of the passenger PA, which is not clear only by the posture, by the at least one piece of the information. It is further possible to execute an appropriate service depending on the clarified state for the passenger PA (for example, if the passenger PA is in a fatigued state, the first service agent is activated).

In addition, the information processing device 3 activates at least one of the plurality of service agents 32421 to 3242N on the basis of the posture unconsciously taken by the passenger PA of the vehicle VE and at least one piece of the information among the road data or the vibration data. Therefore, it is possible to execute a service necessary for the passenger PA that is not clear only from the posture (for example, activate the fifth service agent (safety agent)).

### (Other Embodiments)

Although the embodiments for carrying out the present invention have been described above, however, the present invention should not be limited only by the above-described embodiments.

In the above-described embodiments, all the configurations of the information processing device 3 may be included in the in-vehicle terminal 2. In this case, the in-vehicle terminal 2 corresponds to the information processing device according to the present embodiment. Alternatively, some of the functions of the control unit 32 in the information processing device 3 may be included in the in-vehicle terminal 2. In this case, the entire information processing system 1 corresponds to the information processing device according to the present embodiment.

In the above-described embodiments, as described in "Specific Examples of Service Agents", only a single service agent 3242 may be activated, or a plurality of service agents 3242 may be activated substantially simultaneously.

In the above-described embodiment, in activating the service agent 3242, various types of information acquired by the information acquisition unit 323 are considered in addition to the posture of the passenger PA of the vehicle VE, however, without being limited thereto, a configuration in which only the posture of the passenger PA is considered may be adopted.

### Reference Signs List

- 3: INFORMATION PROCESSING DEVICE
- 321: IMAGE ACQUISITION UNIT
- 322: POSTURE DETECTION UNIT
- 323: INFORMATION ACQUISITION UNIT
- 324: SERVICE EXECUTION UNIT

## Claims

1. An information processing device, comprising:
a posture detection unit that detects a posture unconsciously taken by a passenger in a mobile body; and
a service execution unit that enables execution of a plurality of types of services for the passenger and executes at least one service among the plurality of types of services on the basis of the posture.

2. The information processing device according to claim 1, further comprising:
an image acquisition unit that acquires a captured image in which the passenger is imaged,
wherein in the posture detection unit detects the posture by detecting a skeleton of the passenger on the basis of the captured image.

3. The information processing device according to claim 1 or 2, further comprising:
an information acquisition unit that acquires at least one piece of information among boarding time information regarding a boarding time of the passenger in the mobile body, biological information of the passenger, or congestion information of a travel route of the mobile body,
wherein the service execution unit executes at least one service among the plurality of types of services on the basis of the posture and the at least one piece of the information.

4. The information processing device according to any one of claims 1 to 3, further comprising:
an information acquisition unit that acquires at least one piece of information among travel route information regarding a travel route of the mobile body or route state information regarding a state of the travel route,
wherein the service execution unit executes at least one service among the plurality of types of services on the basis of the posture and the at least one piece of the information.

5. An information processing method executed by an information processing device, the method comprising:
a posture detection step of detecting a posture unconsciously taken by a passenger in a mobile body; and
a service execution step of executing at least one service among a plurality of types of services for the passenger on the basis of the posture.

6. An information processing program for causing a computer to execute:
a posture detection step of detecting a posture unconsciously taken by a passenger in a mobile body; and
a service execution step of executing at least one service among a plurality of types of services for the passenger on the basis of the posture.

7. A storage medium storing an information processing program for causing a computer to execute:
a posture detection step of detecting a posture unconsciously taken by a passenger in a mobile body; and
a service execution step of executing at least one service among a plurality of types of services for the passenger on the basis of the posture.
